Europäisches Patentamt

European Patent Office

Office européen des brevets

(11) Publication number: **0 313 680 B1**

## (12) EUROPEAN PATENT SPECIFICATION

(45) Date of publication of patent specification: 28.08.91  (51) Int. Cl.⁵: **F16D 27/10**

(21) Application number: 87115950.5

(22) Date of filing: 30.10.87

(54) Electromagnetic coupling device.

(43) Date of publication of application:
03.05.89 Bulletin 89/18

(45) Publication of the grant of the patent:
28.08.91 Bulletin 91/35

(84) Designated Contracting States:
DE FR GB

(56) References cited:
EP-A- 0 105 789   AT-B- 267 264
DE-A- 2 424 271   DE-B- 1 170 723
GB-A- 2 159 896   US-A- 4 616 742

(73) Proprietor: MITSUBISHI DENKI KABUSHIKI
KAISHA
2-3, Marunouchi 2-chome Chiyoda-ku
Tokyo 100(JP)

(72) Inventor: Nishii, Katsumi
Ryoden Engineering Co. Ltd. Himeji Division
840, Chiyodacho Himeji-shi Hyogo(JP)
Inventor: Miyamoto, Miyoshi
Ryoden Engineering Co. Ltd. Himeji Division
840, Chiyodacho Himeji-shi Hyogo(JP)

(74) Representative: Eisenführ, Speiser & Strasse
Martinistrasse 24
W-2800 Bremen 1(DE)

## Description

The invention relates to an electromagnetic coupling device comprising a rotating member rotatively driven by a rotating force applied from a driving source; a main shaft provided for free relative rotation within the rotating member for outputting the rotating force from said rotating member; a rotor secured to said main shaft and which can be coupled to said rotating member by means of an electromagnetic force to transmit the rotating force of the rotating member to said main shaft; a stationary yoke provided around said main shaft to apply an electromagnetic force to said rotor to attract an armature on the rotating member; and a holder fixed to the yoke opposite the rotating member in order to prevent rotation of said yoke.

In the field of industrial machinery, various coupling devices and clutches are known which couple the rotating force of a driving shaft to an output shaft to be rotated. Such coupling device may utilize electromagnetic attraction for coupling the driving shaft with the output shaft.

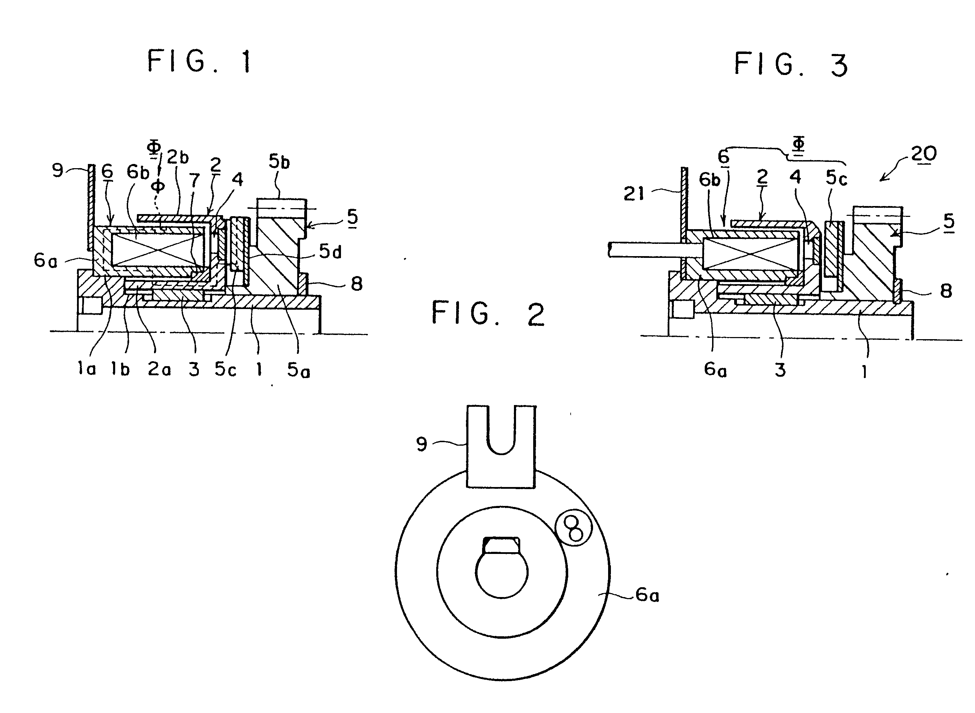

A conventional electromagnetic coupling device of this kind, which can be incorporated to a copying machine or the like, is shown in Fig. 1. The coupling device of Fig. 1 comprises a hollow shaft connected to a driven shaft (not shown) on the above-mentioned output shaft side, a rotor 2 in the form of an U in section as a rotation-driving force transmission element secured to the hollow shaft 1 by means of a key 3, and a magnetism cutting-off window 4 formed on the side wall of the rotor 2, and a lining is disposed on the side of an armature 5c later described of said window 4. Loosely fitted in the hollow shaft 1 is a driving and rotating member 5 which is adjacent to the rotor 2 and capable of being rotated relative to the shaft 1, the member 5 being composed of a hub portion 5a, a gear 5b formed on the outer peripheral surface of the hub portion 5a to receive a driving force from a driving source (not shown), an armature 5c mounted on the end of the hub portion 5a so that the former is opposed to the rotor 2 leaving a predetermined gap, and a plate spring 5d provided between the hub portion 5a and the armature 5c. An exciting device 6 is provided sideway on the side opposite that where the armature 5c of the rotor 2 is arranged, said exciting device 6 being composed of an annular yoke 6a loosely fitted in a large diameter portion 1a of the shaft 1 and whose right end in FIG. 1 extends toward a small diameter portion 1b of the shaft 1, and an exciting coil 6b formed on the annular yoke 6a. Between the rotor 2 and the yoke 6a is interposed a slide and spacer 7 to avoid direct contact therebetween. A ring-like stop ring 8 is mounted on a groove formed in the outer peripheral surface of the shaft 1 to prevent axial slip-out of the hub portion 5a of the driving and rotating member 5.

The yoke 6a and the rotor 2 are that a boss-like inner peripheral portion 2a of the rotor 2 is arranged in a gap portion formed between the inner peripheral surface of the extended portion of the yoke 6a and the peripheral surface of the large diameter portion 1a of the shaft 1 to constitute a part of a magnetic circuit Φ leaving a gap enough to maintain non-contact state from each other. The outer peripheral surface on the right end of the yoke 6a also forms a part of a magnetic circuit while being overlapped in a radial direction while maintaining a non-contact state leaving a predetermined gap with respect to the outer peripheral wall 2b of the rotor 2. Reference numeral 9 designates a holder whose suitable part is placed in engagement with a fixed part for locking in order to prevent associated rotation of the yoke 6a when the shaft 1 is rotated.

The operation of the conventional electromagnetic coupling device constructed as described above will be explained. First, a driving switch not shown is turned on to energize the exciting coil 6b, the magnetic flux Φ is generated to form a magnetic circuit Φ, and the armature 5c is magnetically attracted on the rotor 2 against the resilient force of the plate spring 5d. With this, the rotating force from the driving source not shown is transmitted to the driven shaft not shown through the gear 5b, the hub portion 5a, the plate spring 5d, the armature 5c, the rotor 2 and the shaft 1, and the driven shaft may be rotated.

When the exciting coil 6b is deenergized, the magnetic flux Φ is extinguished, whereby the armature 5c is moved away from the rotor 2 by the resilient force of the plate spring 5d and opposed thereto with a predetermined gap. Therefore, connection between the driving and rotating member 5 and the rotor 2 as the rotating and transmission element is released to cut off a transmission route of the rotating force.

It is noted that when the exciting coil 6b is energized, the yoke 6a is also magnetically attracted on the rotor 2, but they are axially separated from each other by the spacer 7, and the yoke 6a and the rotor 2 come into sliding contact with the spacer 7 so that they may be relatively rotated.

In the conventional electromagnetic coupling device, the associated turning of the yoke 6a carried by the shaft 1 during the rotation of the shaft 1 is prevented by the holder 9 mounted on the end of the yoke 6 as shown in FIG. 2. This holder 9 has been heretofore secured to the end of the york 6a by the fixing means such as welding.

The conventional electromagnetic coupling device has been constructed and assembled as described above. Welding operation of the holder 9 to the yoke 6a is normally accomplished by projection welding. In this projection welding, it is difficult to provide a complete contact between the holder 9 and the yoke 6a, thus posing a problem in that a slight clearance is produced therebetween to extremely deteriorate yield of the product.

There has been encountered another problem in that if operation is made carefully in order to prevent formation of a clearance during the projection welding, it takes a considerable time to weld the holder 9 and the yoke 6a, thus considerably lowering the productivity of manufacturing operation, resulting in a rise in production cost.

Moreover, after welding, plating treatment or the like is often carried out. However, this also poses a further problem in that treatment, plating liquid flows out through said clearance, resulting in a defective plating or deformation of the holder 9.

From EP-A-0 105 789 an electromagnetic coupling for a power steering clutch is known, in which a coil assembly and a holder are secured together by screws projecting through holes in the coil assembly and said holder.

It is an object of the invention to provide an electromagnetic coupling device in which the mounting of a holder to a yoke is facilitated in order to improve the yield of the products at reduced production costs.

According to the invention, an electromagnetic coupling device as defined in the pre-characterizing clause is characterized in that the surfaces of the holder and the yoke comprise projections and holes of corresponding shape joining the two parts together.

A preferred embodiment of an electromagnetic coupling device according to the invention will now be described in detail with reference to the accompanying drawings.

FIG. 1 is a partial schematic sectional view showing one example of a conventional electromagnetic coupling device.

FIG. 2 is a left side view showing a coupled state between a holder and a yoke in the example of FIG. 1.

FIG. 3 is a fragmentary sectional view showing an upper half of an electromagnetic coupling device from a center axis, the figure being provided for explaining one embodiment of an electromagnetic coupling device according to this invention.

FIG. 4 is a left side view showing a yoke end in the embodiment of FIG. 3.

FIG. 5 is a plan view showing the entire construction of the holder in the embodiment of FIG. 3.

FIG. 6 is a sectional view taken on line VI-VI of FIG. 5.

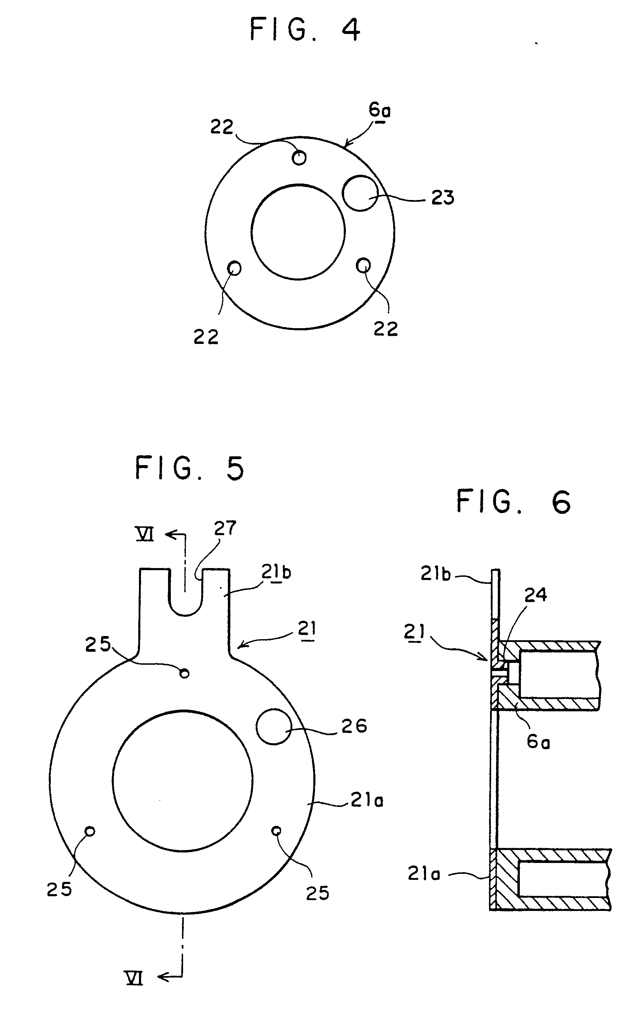

In FIG. 3, parts indicated at the same reference numerals as those shown in FIGS. 1 and 2 showing one example of prior art are those which are the same as or correspond thereto. In FIG. 3, an electromagnetic coupling device 20 is provided with a bolder 21 mounted on the end of a yoke 6a of an exciting device 6. FIG. 4 shows an end of an annular yoke 6a, and three holes 22 are bored in peripherally equally spaced relation in the end of the yoke 6a. An opening 23 for drawing a lead wire is provided between suitable two holes among the holes 22. These three holes 22 are simultaneously formed by punching or the like when said opening 23 for drawing a lead wire which is necessarily formed in the end of the yoke 6a is bored, and therefore it is not necessary to prepare a particular operating step.

On the other hand, the holder 21 is composed of a disk-like annular plate member 21a substantially corresponding to the end of the yoke 6a and an engaging element 21b integrally extending radially outwardly from the annular plate member 21a, as shown in FIG. 5. In the annular plate member 21a, at a position wherein when the member 21a is registered and contacted with the end of the yoke 6a, it corresponds to the hole 22 in the end of the yoke 6a, a projection 24 which can be entered under pressure into the hole 22 is formed by emboss-working as shown in FIG. 6. This projection 24 is formed simultaneously when an opening 26 corresponding to the aforesaid opening 23 which is necessarily formed in the annular plate member 21a of the holder 21 is bored by punching, and a particular operating step is not needed similarly to the case of the holes 22. A U-shaped groove 27 radially inwardly cut from the end edge is formed in the engaging element 21b of the holder 21, the groove 27 being engaged with a suitable fixed portion to thereby form a rotation-stop mechanism for the holder 21.

The holder 21 of the electromagnetic coupling device 20 according to this embodiment constructed as described above is mounted on the end of the yoke 6a by inserting under pressure the projection 24 formed in the annular plate member 21a into the hole 22 formed in the end of the yoke 6a when the electromagnetic coupling device 20 is assembled. Finally, the engaging element 21b of the holder 21 is brought into engagement with a fixed portion in a suitable place in the vicinity of a position where the electromagnetic coupling device 20 is installed thereby preventing rotation of the holder 21, thus impeding the occurrence of the associated turning of the yoke 6a caused by rotation of the shaft 1a.

While in the above-described embodiment, the projections 24 to be formed on the holder 21 have been provided on three locations, the projections are not limited thereto. For example, it can be designed so that projections may be provided, for example, on two locations or four locations, to obtain similar effects. However, if only one projection 24 is provided, this single projection alone receives a rotating torque applied to the engaging element 21b of the holder 21, and therefore the entire holder becomes loosened and as the result the mounting state of the yoke 6a possibly becomes unstable. Accordingly, it is desirable that at least two or more projections 24 are provided.

As described in detail above, according to the electromagnetic coupling device of this invention, the holder provided for the purpose of preventing the associated turning of the yoke may be mounted on the yoke by the fitting between the holder and the projections formed on the opposed surfaces, respectively, of the yoke and the holder, and therefore, it has the following various effects as compared with the integration by fixing means such as welding heretofore carried out.

First, both the elements may be integrated in the form of a positive coupling without a possible occurrence of a slight clearance or the like caused by a building or the like encountered in welding as welding means; since the holder may be integrated after the plating operation for the yoke or the like has been completed, it is possible to prevent a deformation or the like of the holder during the plating operation; and thus, there is provided an effect in that the yield of the product may be greatly enhanced.

In addition, both the elements may be integrated by a simpler operation than the fixing means such as welding; an operator need not pay extra attention to the integrating operation for both the elements, thus simplifying the operation; and besides the operating efficiency may be enhanced, whereby it is possible to provide rapid enhancement of the productivity of the manufacturing work and reduction in production cost.

Furthermore, since the holder may be mounted after the yoke or the like has been subjected to plating treatment, the integrating operation for the yoke and the holder and the post-treatment operation such as plating treatment can be handled as completely independent operation, and therefore, the lowering of the workability of the plating operation caused by the inconvenience of the results of the integrating operation conversely to the aforementioned effects. In the synthetic consideration of the relationship with these operating steps, it is possible to enhance the operating efficiency as a whole and considerably improve the yield of the products.

## Claims

1. An electromagnetic coupling device comprising a rotating member (5) rotatively driven by a rotating force applied from a driving source; a main shaft (1) provided for free relative rotation within the rotating member (5) for outputting the rotating force from said rotating member (5); a rotor (2) secured to said main shaft (1) and which can be coupled to said rotating member (5) by means of an electromagnetic force to transmit the rotating force of the rotating member (5) to said main shaft (1); a stationary yoke (6a) provided around said main shaft (1) to apply an electromagnetic force to said rotor (2) to attract an armature (5c) on the rotating member (5); and a holder (21) fixed to the yoke (6a) opposite the rotating member (5) in order to prevent rotation of said yoke (6a), characterized in that the surfaces of the holder (21) and the yoke (6a) comprise projections (24) and holes (22) of corresponding shape joining the two parts (21, 6a) together.

2. An electromagnetic coupling device according to Claim 1, wherein said projections (24) are formed by emboss-working on the joined surface of said holder (21) to said yoke (6a), and wherein said holes are punched by punching working in the joined surface of said yoke (6a) to said holder (21).

3. A electromagnetic coupling device according to Claim 1, wherein said holes (22) are formed by punching in the joined surface of said holder (21) to said yoke (6a).

4. An electromagnetic coupling device according to Claim 1, wherein three projections (24) and three holes (22) are respectively formed at positions opposed to each other.

5. An electromagnetic coupling device according to Claim 1, wherein said holder (21) is formed from a ring-like flat plate (21a) having a shape suited to the joined surface of said yoke (6a), and a part of the outer peripheral surface of said holder comprises an engaging element (21b) which is formed to be projected outwardly.

6. An electromagnetic coupling device according to Claim 5, wherein said engaging element (21b) is projected approximately in the form of a rectangle and is provided with a U-shaped recess (27) cut diametrally of said ring-like holder, said recess (27) being engaged by a fixed part to thereby fix said holder (21) and impede the associated turning of said yoke (6a).

7. An electromagnetic coupling device according to Claim 1, wherein at a position at which said yoke (6a) and said holder (21) are opposed, there is provided an opening (26) for drawing a lead wire, said lead wire supplying an exciting coil (6b) with power which generates said electromagnetic attraction.

**Revendications**

1. Dispositif de couplage électromagnétique comprenant un élément rotatif (5) entraîné en rotation par une force de rotation appliquée à partir d'une source d'entraînement ;

   un arbre principal (1) prévu en vue d'une rotation relative libre dans l'élément rotatif (5) pour fournir en sortie la force de rotation en provenance dudit élément rotatif (5) ;

   un rotor (2) assujetti audit arbre principal (1) et qui peut être couplé audit élément rotatif (5) au moyen d'une force électromagnétique afin de transmettre la force de rotation de l'élément rotatif (5) audit arbre principal (1) ;

   une culasse fixe (6a) prévue autour dudit arbre principal (1) en vue d'appliquer une force électromagnétique audit rotor (2) pour qu'il attire un induit (5c) se trouvant sur l'élément rotatif (5) ; et

   un élément de maintien (21) fixé à la culasse (6a) à l'opposé de l'élément rotatif (5), afin d'empêcher la rotation de ladite culasse (6a),

   caractérisé en ce que les surfaces de l'élément de maintien (21) et de la culasse (6a) comportent des saillies (24) et des orifices (22) de formes complémentaires joignant l'un à l'autre les deux éléments (21, 6a).

2. Dispositif de couplage électromagnétique selon la revendication 1, dans lequel lesdites saillies (24) sont formées par emboutissage de la surface dudit élément de maintien (21), jointe à ladite culasse (6a), et dans lequel lesdits orifices sont percés par poinçonnage dans la surface de ladite culasse (6a) jointe audit élément de maintien (21).

3. Dispositif de couplage électromagnétique selon la revendication 1, dans lequel lesdits orifices (22) sont formés par poinçonnage de la surface dudit élément de maintien (21), jointe à ladite culasse (6a).

4. Dispositif de couplage électromagnétique selon la revendication 1, dans lequel trois saillies (24) et trois orifices (22) sont respectivement formés en ces emplacements en regard les uns des autres.

5. Dispositif de couplage électromagnétique selon la revendication 1, dans lequel ledit élément de maintien (21) est formé à partir d'une plaque plate annulaire (21a) présentant une forme adaptée à la surface de jonction de ladite culasse (6a), et une partie de la surface périphérique externe dudit élément de maintien comprend un élément d'engagement (21b) qui est formé de façon à faire saillie vers l'extérieur.

6. Dispositif de couplage électromagnétique selon la revendication 5, dans lequel ledit élément d'engagement (21b) fait saillie sous la forme approximative d'un rectangle et est doté d'un évidement en forme de U (27) découpé dans le sens diamétral dudit élément de maintien annulaire, ledit évidement (27) venant en prise autour d'une partie fixe afin d'immobiliser ledit élément de maintien (21) et empêcher la rotation conjointe de ladite culasse (6a).

7. Dispositif de couplage électromagnétique selon la revendication 1, dans lequel, en un emplacement où ladite culasse (6a) et ledit élément de maintien (21) sont en regard, est prévue une ouverture (26) pour le passage d'un fil conducteur, ledit fil conducteur fournissant à une bobine d'excitation (6b) de l'énergie qui génère ladite attraction électromagnétique.

**Patentansprüche**

1. Elektromagnetische Kupplung mit einem rotierenden Teil (5), das durch die Drehbewegung einer Antriebsquelle angetrieben wird;

   einer Hauptwelle (1), die innerhalb des rotierenden Teils (5) frei drehbar gelagert ist um die von dem rotierenden Teil (5) kommende Drehbewegung auszugeben;

   einem an der Hauptwelle (1) befestigten Rotor (2), der mittels einer elektromagnetisch erzeugten Kraft mit dem rotierenden Teil (5) kuppelbar ist, um die Drehbewegung des rotierenden Teils (5) auf die Hauptwelle (1) zu übertragen;

   einem stationären Joch (6a), das um die Hauptwelle (1) herum angeordnet ist und dem Rotor (2) eine elektromagnetische Kraft zuzuführen, damit dieser einen Anker (5c) auf dem rotierenden Teil (5) anzuziehen; und

   einem an dem Joch (6a) dem rotierenden Teil (5) gegenüber befestigten Halter (21) zur Verhinderung einer Rotation des Jochs (6a);

   dadurch gekennzeichnet, daß die Flächen des Halters (21) und des Jochs (6a) Vorsprünge (24) und Öffnungen (22) einander entsprechender Form aufweisen und die beiden Teile (21, 6a) miteinander verbinden.

2. Elektromagnetische Kupplung nach Anspruch 1,
dadurch gekennzeichnet, daß die Vorsprünge (24) durch Formprägen an den aufeinanderliegenden Flächen des Halters (21) und des Jochs (6a) und die Öffnungen durch Stanzen in die aufeinanderliegenden Flächen des Jochs (6a) und des Halters (21) hergestellt werden.

3. Elektromagnetische Kupplung nach Anspruch 1,
dadurch gekennzeichnet, daß die Öffnungen (22) durch Stanzen in die aufeinanderliegenden Flächen des Halters (21) und des Jochs (6a) hergestellt werden.

4. Elektromagnetische Kupplung nach Anspruch 1,
dadurch gekennzeichnet, daß drei Vorsprünge (24) und drei Öffnungen (22) an einander gegenüberliegenden Positionen hergestellt werden.

5. Elektromagnetische Kupplung nach Anspruch 1,
dadurch gekennzeichnet, daß der Halter (21) aus einer ringförmigen, flachen Platte (21a) gebildet wird, deren Form der zu befestigenden Fläche des Jochs (6a) angepaßt ist, und daß ein Teil der äußeren Umfangsfläche des Halters ein Angriffselement (21b) aufweist, das daran angeformt ist und sich nach außen erstreckt.

6. Elektromagnetische Kupplung nach Anspruch 5,
dadurch gekennzeichnet, daß das Angriffselement (21b) sich etwa in der Form eines Rechteckes nach außen erstreckt und einen U-förmigen Ausschnitt (27) aufweist, der diametral in den ringförmigen Halter geschnitten ist, und daß an dem Ausschnitt (27) ein festes Teil angreift, um den Halter (21) zu fixieren und ein Verdrehen des Jochs (6a) zu verhindern.

7. Elektromagnetische Kupplung nach Anspruch 1,
dadurch gekennzeichnet, daß an einer Position, an der sich das Joch (6a) und der Halter (21) einander gegenüberstehen, eine Öffnung für das Hindurchführen eines Anschlußdrahtes vorgesehen ist, über den eine Erregerwicklung (6b) erregt wird, um die elektromagnetische Kraft zu erzeugen.

FIG. 3

FIG. 2

FIG. 1

# FIG. 4

# FIG. 5

# FIG. 6